# EUROPEAN PATENT SPECIFICATION

(11) **EP 0 844 110 B1**
(45) Date of publication and mention of the grant of the patent: **03.07.2002**
(21) Application number: 97309294.3
(22) Date of filing: 19.11.1997
(51) Int. Cl.: B60C 17/00, B60C 13/00, B60C 9/14, B60C 9/18

(54) **Pneumatic tyre**
Luftreifen
Bandage pneumatique

(30) Priority: 21.11.1996 JP 31093896
(43) Date of publication of application: 27.05.1998
(73) Proprietor: Sumitomo Rubber Industries Ltd., Kobe-shi, Hyogo-ken (JP)
(72) Inventor: Tanaka, Masatoshi, Takarazuka-shi, Hyogo-ken (JP)
(74) Representative: Stewart, Charles Geoffrey

(56) References cited:
- DE-A- 3 242 323
- FR-A- 2 425 334
- US-A- 4 215 735

## Description

The present invention relates to a pneumatic tyre more particularly to a run flat tyre.

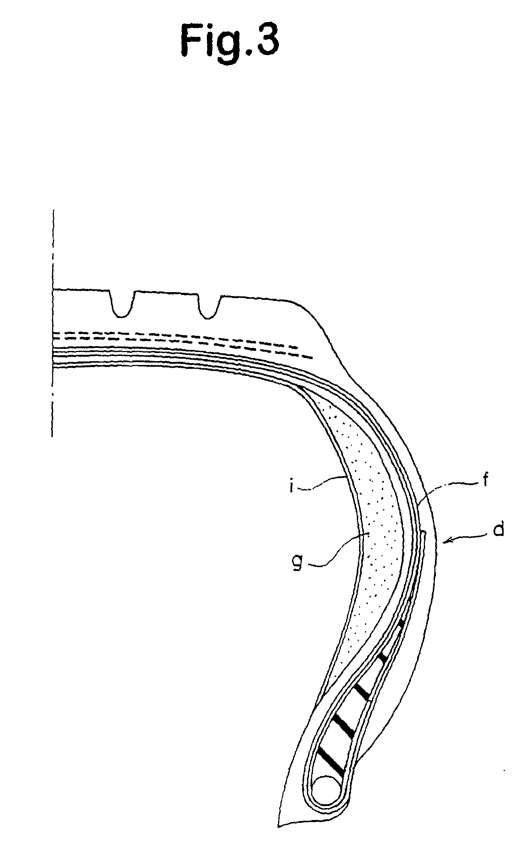

In order to maintain safe running when the tyre is punctured, various propositions have been made. Fig.3 shows a typical proposition, where the sidewall portion (d) is provided between the carcass (f) and inner liner (i) of airtight rubber with a reinforcing layer (g). This reinforcing layer (g) is made of a vast volume of rubber to support the tyre load mainly by itself. Therefore, the ride comfort is sacrificed, and the tyre weight is inevitably increased to worsen the fuel consumption, which goes against the current requirements.

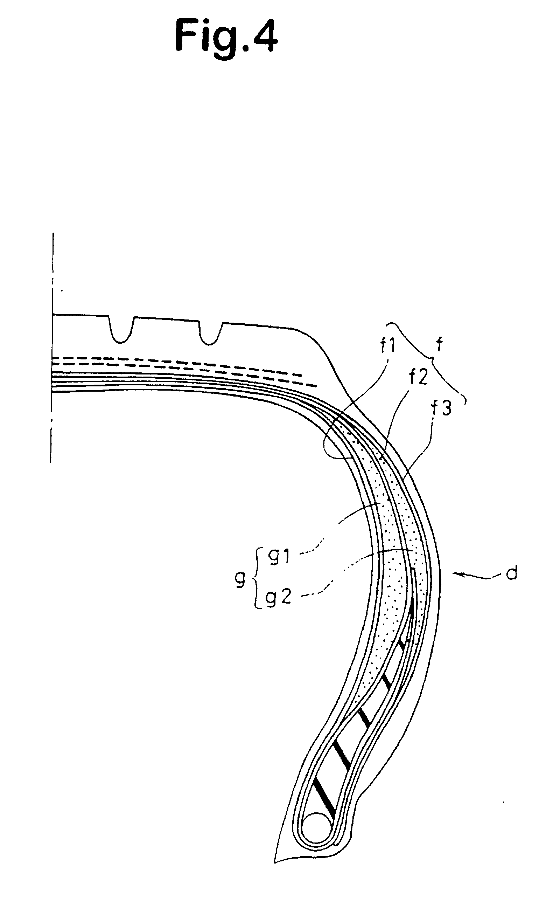

Fig.4 shows another proposition, where two reinforcing rubber layers (g1) and (g2) are disposed between three plies (f1, f2 and f3) of the carcass (f) in the sidewall portion (d). In this case, it can be possible to reduce the rubber volume if the target load supporting power is the same level as of Fig.3. In practice, however, it is difficult to attain a sufficient load supporting power even if the same or even a greater volume of rubber is used.

Further, even if the sidewall portions are fully reinforced by such reinforcing layers (g, g1, g2) at the sacrifice of the tyre weight, ride comfort and the like, it is very difficult to improve run flat performance especially to increase the runable distance, because the tyre shoulder portions or buttress portions, which are usually the weakest portion of the tyre, contact the ground at high ground pressure are worn, rapidly fatigue and thus are easily broken.

US-A-4 215 735 shows a pneumatic tyre according to the preamble of claim 1.

It is an object of the present invention to provide a pneumatic tyre improved in run flat performance without sacrificing ride comfort and tyre weight.

Said object is solved by the features of claim 1.

Therefore, the crown reinforcing rubber layer and carcass plies disposed radially inside thereof display strong resistance to bending deformation that would otherwise make the tread centre become hollow. Therefore, the tyre shoulder portions or buttress portions are prevented from contacting the ground when the tyre is punctured, and ground pressure is maintained even in the tread centre. As the bending deformation of the tread portion is minimised, it becomes possible to greatly reduce the volume of the side reinforcing rubber layer in comparison with the prior arts.

Preferably, the reinforcing rubber layers are made of a low heat generation rubber having a complex elastic modulus of 8 to 15 Mpa, and a loss tangent of 0.03 to 0.08. The complex elastic modulus of the side reinforcing rubber layer is preferably less than the complex elastic modulus of the crown reinforcing rubber layer. The axial width of the crown reinforcing rubber layer is preferably 0.7 to 1.2 times the ground contacting width. The radial extent of the side reinforcing rubber layer is preferably 0.2 to 1.2 times the ground contacting width. The thickness of the crown reinforcing rubber layer gradually decreases towards its axial ends from the centre, and the maximum thickness is preferably in the range of from 2 to 10%, more preferably 2.5 to 6% of the ground contacting width.

Here, the ground contacting width is defined as the maximum axial width of the ground contacting region when the tyre is mounted on a standard rim, inflated to normal pressure and loaded with a standard load which are specified by standardising organisation such as JATMA (Japan), TRA (USA), ETRTO (Europe) and the like.

Embodiments of the present invention will now be described in detail in conjunction with the accompanying drawings:
Fig.1 is a cross sectional view of an embodiment of the present invention;
Fig.2 is a cross sectional view of another embodiment of the present invention; and
Figs.3 and 4 are cross sectional views of prior art tyres.

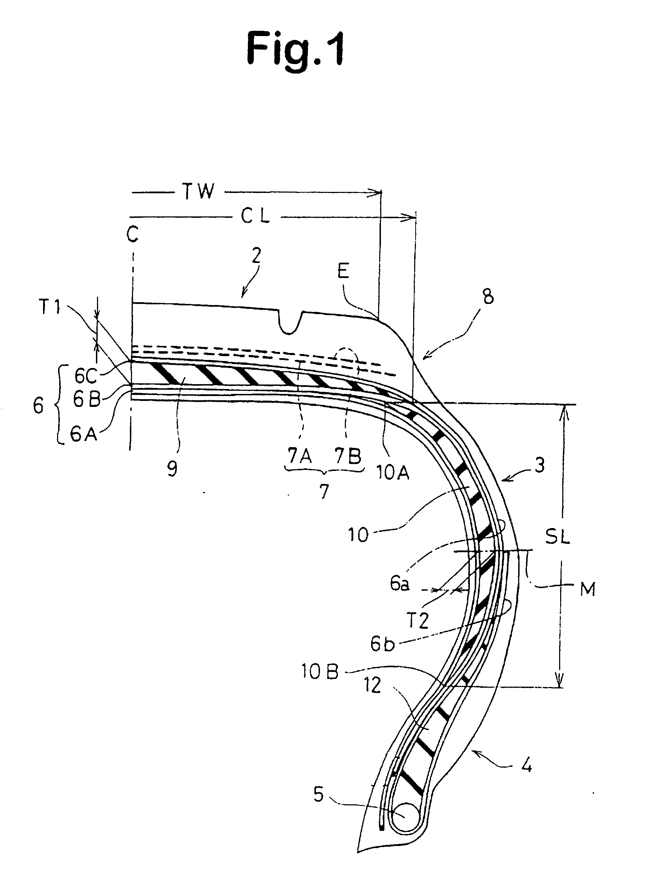

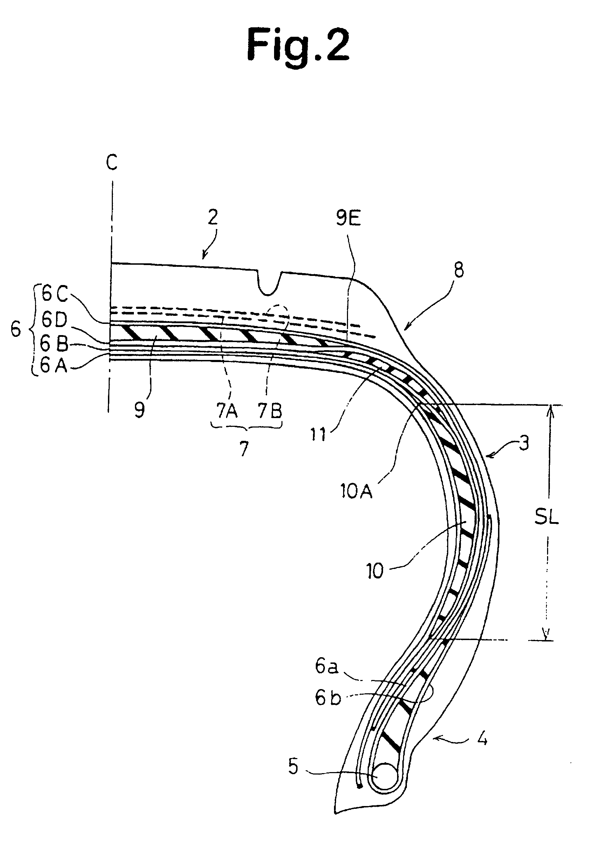

In Figs.1 and 2, pneumatic tyres according to the present invention are shown in a normal inflated condition in which the tyre is mounted on its standard rim and inflated to standard pressure but loaded with no tyre load.

The tyre comprises a tread portion 2, a pair of axially spaced bead portions 4 each with a bead core 5 therein, a pair of sidewall portions 3 extending between the tread edges and the bead portions, a carcass 6 extending between the bead portions 4, and a belt 7 disposed radially outside the carcass 6 in the tread portion.

The belt 7 comprises two plies 7A and 7B of cords laid for example at an angle of 10 to 35 degrees to the tyre equator C, the cords in each ply being parallel with each other but crosswise to the next ply. For the belt cords, high modulus cords, e.g. steel cords, aromatic polyamide and the like are preferably used.

The carcass 6 comprises at least three plies 6A, 6B, 6C and 6D of cords arranged radially at an angle of 90 to 65 degrees with respect to the tyre equator C. For the carcass cords, steel cords and organic fibre cords, e.g. polyester, rayon and the like can be used.

In the embodiments shown in Figs.1 and 2, the carcass ply 6C is outermost and extends between the bead portions 4 and is turned up around the bead cores 5 from the axially inside to outside of the tyre to form a pair of turnup portions 6b and a main portion 6a therebetween. The carcass ply 6A is innermost and the carcass ply 6B is therebetween. The plies 6A and 6B extend between the bead portions 4 but they are not turned up around the bead cores 5 and terminate in the respective bead portions and axially inside the bead cores 5.

Further, in each of the bead portions 4, a bead apex 12 made of a hard rubber compound is disposed between the main portion 6a and turnup portion 6b of the carcass ply 6C. The bead apex 12 tapers radially outwardly from the bead core 5.

The tread portion 2 is provided between the radially outermost carcass ply 6C and the radially inner next carcass ply 6B, 6D with a crown reinforcing rubber layer 9. The axial width CL of the crown reinforcing rubber layer 9 is 0.7 to 1.2 times the ground contacting width TW. The thickness of the crown reinforcing rubber layer 9 gradually decreases towards its axial ends from the centre or the tyre equator C. The thickness T1 at the tyre equator C is in the range of from 2 to 10%, more preferably 2.5 to 6% of the ground contacting width TW.

Accordingly, the assembly of the crown reinforcing rubber layer 9 and the carcass plies adjacent radially outwardly and inwardly thereto can resist bending deformation.

Further, the resistance to the bending deformation is sufficient to prevent the buttress regions 8 from contacting with the ground, without deteriorating the ride comfort or increasing the tyre weight, because the number of the carcass plies is larger radially inside of the Crown reinforcing rubber layer 9, that is, on the side where a large tensile stress is produced when the tyre on a car is punctured, than the other side, and further, the thickness is increased in the centre where the compressive stress is larger when the tyre is punctured.

The above-mentioned sidewall portion 3 is provided between the innermost carcass ply 6A and the axially outer next carcass ply 6B with a side reinforcing rubber layer 10. The side reinforcing rubber layer 10 tapers towards its radially outer end 10A and inner end 10B. Thus, it has a substantially crescent sectional shape, and the maximum thickness T2 lying in the middle thereof in the tyre radial direction is set in the range of from 2 to 10% more preferably 2.5 to 6% of the ground contacting width TW. Preferably, the maximum thickness T2 occurs in the maximum tyre section width position M.

The radial extent SL of the side reinforcing rubber layer lo measured radially between the radially outer end 10A and inner end 10B is 0.2 to 1.2 times, more preferably 0.3 to 0.5 times the ground contacting width TW. The radially inner end 10B of the side reinforcing rubber layer 10 overlaps the radially outer end of the bead apex 12.

In Fig.1, the radially outer end 10A of the side reinforcing rubber layer 10 overlaps the axial ends of the crown reinforcing rubber layer 9 and the belt 7.

Accordingly, similarly to the crown reinforcing rubber layer 9, the assembly of the side reinforcing rubber layer 10 and the carcass plies adjacent axially outwardly and inwardly thereto resist bending deformation.

Further, the resistance to bending deformation is effectively increased to prevent the inner surface of the sidewall portion 3 from rubbing against itself and thus acts to prevent heat damage, without deteriorating ride comfort or increasing the tyre weight. This is because the number of the carcass plies is larger axially outside the side reinforcing rubber layer 10, that is, on the side where a large tensile stress is produced when the tyre on a car is punctured, than the other side, and further, the thickness is increased in the centre where the compressive stress is larger when the tyre is punctured.

As explained above, as the crown reinforcing rubber layer 9 is disposed and at least two carcass plies are disposed along the axially outside of the side reinforcing rubber layer 10, it is possible to utilise less volume for side reinforcing rubber layer 10 than in the prior art, and thus a remarkable tyre weight reduction is possible in comparison with such prior arts.

If the thickness T2 is less than 2% of TW, the resistance to bending deformation of the side reinforcing rubber layer 10 becomes insufficient. If the thickness T2 is more than 10% of TW, heat generation tends to increase to decrease the durability and also the ride comfort is liable to deteriorate.

The crown reinforcing rubber layer 9 and the side reinforcing rubber layer 10 are made of a low-heat-generation rubber whose complex elastic modulus E* is 8 to 15 Mpa or more preferably 8 to 12 Mpa, and loss tangent (tan δ) is 0.03 to 0.08 or more preferably 0.05 to 0.08.

Therefore, the tread portion 2 and sidewall portion 3 are provided with the bending rigidity necessary for long-distance run flat use, maintaining ride comfort to some degree.

If the complex elastic modulus E* is less than 8 Mpa, the bending rigidity becomes insufficient. If the complex elastic modulus E* is more than 15 Mpa, the ride comfort during normal running is liable to be deteriorated.

If the loss tangent (tan δ) is more than 0.08, the heat generation increases and the run flat ability decreases. If the loss tangent (tan δ) is less than 0.03, the ride comfort tends to deteriorate.

In view of the ride comfort in normal use, it is preferable that the reinforcing rubber layer disposed nearer to the bead portion 4 has a smaller complex elastic modulus E*. For example, the complex elastic modulus E1* of the crown reinforcing rubber layer 9 is 12 Mpa, and the complex elastic modulus E2* of the side reinforcing rubber layer 10 is 8 Mpa.

Although the reinforcing rubber layers 9, 10 are provided, since only one carcass ply is turned-up in the bead portion excessive increase in bending rigidity near the bead portions is avoided and ride comfort in normal use is maintained.

The complex elastic modulus E* and the loss tangent (tan δ) are measured with a viscoelastic spectrometer of IWAMOTO SEISAKUSYO make using a specimen of 4 mm width X 30 mm length X 1.5 mm thickness. The measuring conditions are as follows:
Temperature: 70 deg. C
Frequency: 10 Hz
Initial strain: 10%
Dynamic distortion: plus/minus 2%

In Fig.2 showing another embodiment of the present invention, in addition to the above-mentioned carcass plies 6A-6C, the carcass 6 further comprises a carcass ply 6D which is disposed between the carcass plies 6C and 6B. The carcass ply 6D is not turned up and terminates in the lower sidewall portion, though the carcass plies 6A and 6B are terminated in the bead portion as explained above.

In this embodiment and also the former embodiment, the terminal ends of the carcass plies which are not turned up are such that the axially inner the carcass ply position, the radially inner the terminal end position.

In this embodiment, a buttress reinforcing rubber layer 11 is further disposed between the carcass plies 6B and 6D in the buttress region 8. Corresponding to this arrangement, the radially outer end 10A of the side reinforcing rubber layer 10 is disposed at a relatively lower height in comparison with the former example and thus spaced apart from the axial end 9E of the crown reinforcing rubber layer 9. In this space, the buttress reinforcing rubber layer 11 is disposed. As shown in Fig.2, both the ends are tapered and overlap with the axial end 9E of the crown reinforcing rubber layer 9 and the radial outer end 10A of the side reinforcing rubber layer 10.

The complex elastic modulus E3* and loss tangent (tan δ) of the buttress reinforcing rubber layer 11 are also set in the same ranges as for the crown and side reinforcing rubber layers 9 and 10. It is preferable for the ride comfort in normal use to gradually decrease the complex elastic modulus from the tyre equator toward the bead portion, that is, E1* > E3* > E2*.

When viewed along the carcass from the tyre equator to the bead portion 4, the positions of the reinforcing rubber layers 9, 11, 10 are changed from outside to inside of the tyre within the thickness of the carcass 6. In other words, the number of the carcass plies adjacent to the outside of the reinforcing rubber layer is gradually increased, but the number of the carcass plies adjacent to the inside of the reinforcing rubber layer is gradually decreased. Thus, according to the direction of bending deformation when the tyre on a car is punctured, the tyre is effectively reinforced by the assembly of the reinforcing rubber layers 9, 10, 11 and carcass plies 6A, 6B, 6C, 6D.

The buttress region 8 is effectively reinforced by the assembly of the buttress reinforcing rubber layer 11, two carcass plies 6C and 6D adjacent to the outside thereof and two carcass plies 6A and 6B adjacent to the inside thereof which shows strong resistance against both the inward and outward bending deformation.

This arrangement is suitable for application in pneumatic tyres for relatively heavy vehicles such as light truck, recreational vehicle and the like, and also real heavy duty vehicles such as buses, trucks and the like.

### Comparison Tests

Test tyres having the specifications given in Table 1 were made, and the following tests were carried out:
Tyre size: 225/60R16 97H (TW=185mm)
Rim size : 16X7JJ

### A) Run flat performance test

A test car, Japanese 4000cc car provided on all the wheels with test tyres in which the front right tyre is decreased to zero pressure was run at a speed of 80 km/H, and the running distance until the tyre was broken was measured.

### B) Ride comfort test

Using the above-mentioned test car of which all the tyres were inflated to a normal pressure of 2.0 kgf/sq.cm, the ride comfort was evaluated into five ranks by the driver's feeling.

The test results are also shown in Table 1.

It was confirmed from the test results that the tyres according to the present invention can be remarkably improved in run flat performance, whilst maintaining or improving the ride comfort and tyre weight.

**Table 1**

| Tyre | Ex. 1 | Ex. 2 | Ref. 1 | Ref. 2 | Ex. 3 | Ref. 3 |
|---|---|---|---|---|---|---|
| Structure | Fig. 1 | Fig. 1 | Fig. 3 | Fig. 3 | Fig. 2 | Fig.4 |
| Carcass | | | | | | |
| No of ply Cord material Cord angle | 3 | 3 | 3 | 3 | 4 | 3 |
| | Polyester 90 degrees | | | | | |
| Belt | | | | | | |
| No of ply Cord material Cord angle | 2 steel 24 degrees | | | | | |
| Reinforcing layer Crown | | | | | | |
| CL (mm) | 205 | 205 | | | 185 | |
| T1 (mm) | 6 | 6 | | | 5 | |
| E1* (Mpa) | 12 | 12 | none | none | 12 | none |
| tan δ | 0.1 | 0.1 | | | 0.1 | |
| CL/TW | 1.1 | 1.1 | | | 1 | |
| T1/TW (%) | 3.2 | 3.2 | | | 2.7 | |
| Side | | | | | | |
| SL (mm) | 73 | 73 | 73 | 73 | 61 | 73 |
| T2(mm) | 6 | 6 | 12 | 19 | 6 | 8 |
| E2* (Mpa) | 12 | 8 | 12 | 12 | 8 | 12 |
| tan δ | 0.1 | 0.1 | 0.05 | 0.05 | 0.1 | 0.05 |
| SL/TW | 0.4 | 0.4 | 0.39 | 0.39 | 0.3 | 0.39 |
| T2/TW(%) | 3.2 | 3.2 | 6.5 | 10.3 | 3.2 | 4.3 |
| Buttress | | | | | | |
| BL (mm) | | | | | 34 | 61 |
| T3 (mm) | | | | | 5 | 6 |
| E3* (Mpa) | none | none | none | none | 12 | 12 |
| tan δ | | | | | 0.1 | 0.05 |
| BL/TW | | | | | 0.2 | 0.33 |
| T3/TW (%) | | | | | 2.7 | 3.2 |
| Running distance (km) | 230 | 160 | 33 | 70 | 230 | 120 |
| Ride Comfort | 2.8 | 3 | 2.9 | 2.5 | 3 | 2.5 |
| Tyre weight | 12 | 12 | 12.5 | 13.3 | 13 | 12.5 |

## Claims

1. A pneumatic tyre comprising a tread portion (2), a pair of sidewall portions (3) a pair of bead portions (4), a carcass (6) comprising at least three radial plies (6A,6B,6C,6D) each extending between the bead portions (4) through the tread portion (2) and sidewall portions (3), the tread portion (2) being provided between the radially outermost carcass ply (6C) and radially inner next carcass ply (6B,6D) with a crown reinforcing rubber layer (9) so that at least two carcass plies (6B,6C;6B,6C,6D) are disposed radially inside the crown reinforcing rubber layer (9) the thickness of the crown reinforcing rubber layer (9) gradually decreasing towards its axial ends from the centre, and each sidewall portion (3) is provided with a side reinforcing rubber layer (10) so that at least two carcass plies (6B,6C;6B,6C,6D) are disposed axially outside the side reinforcing rubber layer (10) each side reinforcing rubber layer (10) tapering towards its radial outer end (10A) and inner end (10B), **characterized in that** each side reinforcing rubber layer (10) is provided between the axially innermost carcass ply (6A) and axially outer next carcass ply (6B).

2. A pneumatic tyre according to claim 1, **characterised in that** each said bead portion (4) is provided with a bead core (5), and the radially outermost carcass ply (6C,6D) is turned up around the bead cores (5) in the bead portions (4) to define a pair of turnup portions (6b) and a main portion (6a) therebetween, but the remaining carcass plies (6A,6B) are not turned up but terminate axially inside the main portion (6a) of the outermost carcass ply (6C,6D).

3. A pneumatic tyre according to claim 1 or 2, **characterised in that** the reinforcing rubber layers (9,10) are made of a low heat generation rubber having a complex elastic modulus of 8 to 15 Mpa, and a loss tangent of 0.03 to 0.08 with the following measuring conditions : temperature : 70 deg. C, Frequency : 10 Hz, initial strain : 10 % and dynamic distortion : plus/minus 2 %.

4. A pneumatic tyre according to claim 1, 2 or 3, **characterised in that** the complex elastic modulus of the side reinforcing rubber layer (10) is less than the complex elastic modulus of the crown reinforcing rubber layer (9).

5. A pneumatic tyre according to claim 1, 2, 3 or 4, **characterised in that** said carcass (6) comprises four plies (6A,6B,6C,6D), and a buttress reinforcing rubber layer (11) is further provided between the crown reinforcing rubber layer (9) and each of the side reinforcing rubber layers (11) so that the carcass (6) is provided between the four plies (6A,6B,6C,6D) with the reinforcing rubber layers (9,10,11) changing their positions from the outside to inside of the tyre when viewed along the carcass (6) from the tyre equator (C) to the bead portions (4).

## Patentansprüche

1. Luftreifen, umfassend einen Laufstreifenabschnitt (2), zwei Seitenwandabschnitte (3), zwei Wulstabschnitte (4), eine Karkasse (6) mit mindestens drei radialen Lagen (6A, 6B, 6C, 6D), die sich jeweils zwischen den Wulstabschnitten (4) durch den Laufstreifenabschnitt (2) und die Seitenwandabschnitte (3) erstrecken, wobei der Laufstreifenabschnitt (2) zwischen der radial äußersten Karkasslage (6C) und der radial inneren nächsten Karkasslage (6B, 6D) mit einer Kronenverstärkungsgummischicht (9) versehen ist, so dass mindestens zwei Karkasslagen (6B, 6C; 6B; 6C, 6D) radial innerhalb der Kronenverstärkungsgummischicht (9) angeordnet sind, wobei die Dicke der Kronenverstärkungsgummischicht (9) allmählich in Richtung ihrer axialen Enden von der Mitte aus abnimmt, und jeder Seitenwandabschnitt (3) mit einer Seitenverstärkungsgummischicht (10) versehen ist, so dass mindestens zwei Karkasslagen (6B, 6C; 6B, 6C, 6D) axial außerhalb der Seitenverstärkungsgummischicht (10) angeordnet sind, wobei sich jede Seitenverstärkungsgummischicht (10) in Richtung ihres radial äußeren Endes (10A) und inneren Endes (10B) verjüngt, **dadurch gekennzeichnet, dass** jede Seitenverstärkungsgummischicht (10) zwischen der axial innersten Karkasslage (6A) und der axial äußeren nächsten Karkasslage (6B) vorgesehen ist.

2. Luftreifen nach Anspruch 1, **dadurch gekennzeichnet, dass** jeder Wulstabschnitt (4) mit einem Wulstkern (5) versehen ist, und dass die radial äußerste Karkasslage (6C, 6D) um die Wulstkerne (5) in den Wulstabschnitten (4) umgeschlagen ist, um zwei Umschlagabschnitte (6b) und einen Hauptabschnitt (6a) dazwischen zu definieren, aber die restlichen Karkasslagen (6A, 6B) nicht umgeschlagen sind, sondern axial innerhalb des Hauptabschnittes (6a) der äußersten Karkasslage (6C, 6D) enden.

3. Luftreifen nach Anspruch 1 oder 2, **dadurch gekennzeichnet, dass** die Verstärkungsgummischichten (9, 10) aus einem wenig Wärme erzeugenden Gummi mit einem komplexen Elastizitätsmodul von 8 bis 15 MPa und einem Verlusttangens von 0,03 bis 0,08 mit den folgenden Messbedingungen hergestellt sind: Temperatur: 70°C, Frequenz: 10 Hz, Anfangsdehnung: 10 % und dynamische Verzerrung plus/minus 2 %.

4. Luftreifen nach Anspruch 1, 2 oder 3, **dadurch gekennzeichnet, dass** der komplexe Elastizitätsmodul der Seitenverstärkungsgummischicht (10) kleiner als der komplexe Elastizitätsmodul der Kronenverstärkungsgummischicht (9) ist.

5. Luftreifen nach Anspruch 1, 2, 3 oder 4, **dadurch gekennzeichnet, dass** die Karkasse (6) vier Lagen (6A, 6B, 6C, 6D) umfasst, und ferner eine Stützverstärkungsgummischicht (11) zwischen der Kronenverstärkungsgummischicht (9) und jeder der Seitenverstärkungsgummischichten (11) vorgesehen ist, so dass die Karkasse (6) zwischen den vier Lagen (6A, 6B, 6C, 6D) mit den Verstärkungsgummischichten (9, 10, 11) versehen ist, die, entlang der Karkasse (6) vom Reifenäquator (C) zu den Wulstabschnitten (4) betrachtet, ihre Positionen von der Außenseite zur Innenseite des Reifens verändern.

## Revendications

1. Pneumatique comportant une partie de bande de roulement (2), une paire de parties de flanc (3), une paire de parties de talon (4), une carcasse (6) qui comprend au moins trois nappes radiales (6A, 6B, 6C, 6D) s'étendant chacune entre les parties de talon (4) et les parties de flanc (3) par l'intermédiaire de la partie de bande de roulement (2), la partie de bande de roulement (2) étant disposée entre la nappe (6C) de carcasse la plus externe et la nappe (6B, 6D) de carcasse suivante radialement interne avec une couche (9) de caoutchouc de renforcement de partie supérieure afin que deux nappes de carcasse au moins (6B, 6C ; 6B, 6C, 6D) soient placées radialement à l'intérieur de la couche (19) de caoutchouc de renforcement de partie supérieure, l'épaisseur de la couche (9) de caoutchouc de renforcement de la partie supérieure diminuant progressivement vers ses extrémités axiales depuis le centre, chaque partie de flanc (3) étant munie d'une couche (10) de caoutchouc de renforcement latéral afin qu'au moins deux nappes de carcasse (6D, 6C ; 6B, 6C, 6D) soient disposées axialement à l'extérieur de la couche (10) de caoutchouc de renforcement latéral, chaque couche (10) de caoutchouc de renforcement latéral ayant une dimension qui varie progressivement vers ses extrémités radiales externe (10A) et interne (10B), **caractérisé en ce que** chaque couche (10) de caoutchouc de renforcement latéral est disposée entre la nappe de carcasse (6A) axialement la plus interne et la nappe de carcasse (6B) suivante axialement externe.

2. Pneumatique selon la revendication 1, **caractérisé en ce que** chaque partie de talon (4) a une tringle (5), et la nappe de carcasse (6C, 6D) radialement la plus externe est repliée autour des tringles (5) des parties de talon (4) pour délimiter une paire de parties repliées (6b) et une partie principale intermédiaire (6a), mais les nappes restantes de carcasse (6A, 6B) ne sont pas repliées et se terminent axialement à l'intérieur de la partie principale (6a) de la nappe de carcasse la plus externe (6C, 6D).

3. Pneumatique selon la revendication 1 ou 2, **caractérisé en ce que** les couches de caoutchouc de renforcement (9, 10) sont formées d'un caoutchouc à faible dégagement de chaleur ayant un module complexe d'élasticité compris entre 8 et 15 MPa, et une tangente à l'angle de pertes comprise entre 0,03 et 0,08 dans les conditions suivantes de mesure : température 70 °C, fréquence 10 Hz, déformation initiale 10 %, et déformation dynamique de ±2 %.

4. Pneumatique selon la revendication 1, 2 ou 3, **caractérisé en ce que** le module complexe d'élasticité de la couche (10) de caoutchouc de renforcement est inférieur au module complexe d'élasticité de la couche (9) de caoutchouc de renforcement de la partie supérieure.

5. Pneumatique selon la revendication 1, 2, 3 ou 4, **caractérisé en ce que** la carcasse (6) comporte quatre nappes (6A, 6B, 6C, 6D), et une couche (11) de caoutchouc de renforcement d'épaulement est en outre placée entre la couche (9) de caoutchouc de renforcement de partie supérieure et chacune des couches (11) de caoutchouc de renforcement latéral afin que la carcasse (6) soit disposée entre les quatre nappes (6A, 6B, 6C, 6D) et que les couches (9, 10, 11) de caoutchouc de renforcement changent de position de l'extérieur vers l'intérieur du pneumatique, le long de la carcasse (6) depuis l'équateur (C) du pneumatique vers les parties de talon (4).
